Europäisches Patentamt

European Patent Office

Office européen des brevets

(11) Publication number: **0 362 150**
**A1**

# EUROPEAN PATENT APPLICATION

(21) Application number: 89830361.5

(22) Date of filing: 11.08.89

(51) Int. Cl.⁵: **E01C 9/00 , E01C 13/00**

(30) Priority: 16.09.88 IT 2188588 U

(43) Date of publication of application:
**04.04.90 Bulletin 90/14**

(84) Designated Contracting States:
**AT CH DE ES FR GB LI**

(71) Applicant: **ROLLY GREEN S.r.l.**
**Via Roma, 25**
**I-22073 Fino Mornasco (Como)(IT)**

(72) Inventor: **Salto, Fabrizio**
**Via A. Cossa, 29**
**I-20122 Milano(IT)**

(74) Representative: **Righetti, Giuseppe**
**Bugnion S.p.A. Via Carlo Farini, 81**
**I-20159 Milano(IT)**

(54) Holding and reinforcing modular element for the accomplishment of grass pavings.

(57) A holding and reinforcing element (1) made of
plastic material and adapted to be combined in a
modular manner with other similar elements (1a, 1b,
1c) so as to give rise to a uniform paving. It com-
prises a flat base (2) from which partitions (3) verti-
cally stand up. Said partitions mutually intersect
thereby giving rise to a number of homogeneously
distributed cells (4). A plurality of through holes (6)
formed in base (2) are associated with each cell (4),
and a plurality of recesses (7) are provided on the
upper edges of the cells.

FIG1

EP 0 362 150 A1

# Holding and reinforcing modular element for the accomplishment of grass pavings.

The present invention relates to a holding and reinforcing modular element for the accomplishment of grass pavings. In particular, the element of the invention can be used in the accomplishment of grass areas along which motor-vehicles and the like frequently run or which are frequently trampled on. Said areas can be for example pedestrian alleys, playgrounds, parking areas, traffic lanes, golf-courses and the like.

It is known that systems currently used for the purpose of allowing grass to grow in areas which are frequently trampled on, substantially require the use of cube-shaped elements or panels made of cement, the panels being in the form of a great number of small prisms suitably spaced apart from one another. At the moment of installation said cube-shaped elements or panels are disposed in modular fashion on a suitably prepared ground in order to create blank spaces therebetween which are then filled with earth in order to allow grass to grow. However the use of the above discussed paving systems gives rise to several problems.

First of all, cement elements have not proved to be perfectly adapted to meet the expected aesthetic requirements. In fact, they inevitably appear on the grass surface and occupy an area which is half the area actually covered with grass.

In addition, in hot days cement is subjected to store heat during the day and give it back to the ground at night. As a result, grass becomes yellow and its growth is seriously impaired.

Furthermore, traditional cement elements are rather brittle. Thus they can be easily broken and subsequently upset or lifted up from the ground as a result of frost in cold months.

It is also to be pointed out that these elements are rather heavy and therefore storage, transport and installation operations are greatly hindered.

The main object of the present invention is to solve the above discussed drawbacks.

The foregoing and further objects which will become more apparent in the course of the following description are substantially attained by a holding and reinforcing modular element for the accomplishment of grass pavings, characterized in that it comprises a flat base from which mutually intersecting partitions vertically stand up which give rise to a number of homogenously distributed cells each of them having at least a through hole formed in said base, associated therewith, said holding and reinforcing element being made of plastic material and being arranged so as to be combined in a modular fashion with other similar elements thereby giving rise to a uniform paving.

Further features and advantages of the invention will best be understood from the detailed description of a preferred embodiment of a holding and reinforcing modular element for the accomplishment of grass pavings given hereinafter by way of non-limiting example with reference to the accompanying drawings in which:

- Fig. 1 is a top view of a holding and reinforcing element in accordance with the invention which is associated in a modular fashion with other identical elements partially shown;

- Fig. 2 is a front view of the holding and reinforcing element in question.

Referring to the drawings, a holding and reinforcing modular element for the accomplishment of grass pavings according to the invention has been generally identified by reference numeral 1.

Element 1 is preferably made of plastic material of one piece construction, for example high density polyethylene and substantially has a flat base 2 from which partitions 3 vertically stand up. In greater detail, provision is made for one series of partitions 3a extending parallelly to a predetermined distance from one another, and a second series of partitions 3b disposed at right angles to the first series of partitions 3a.

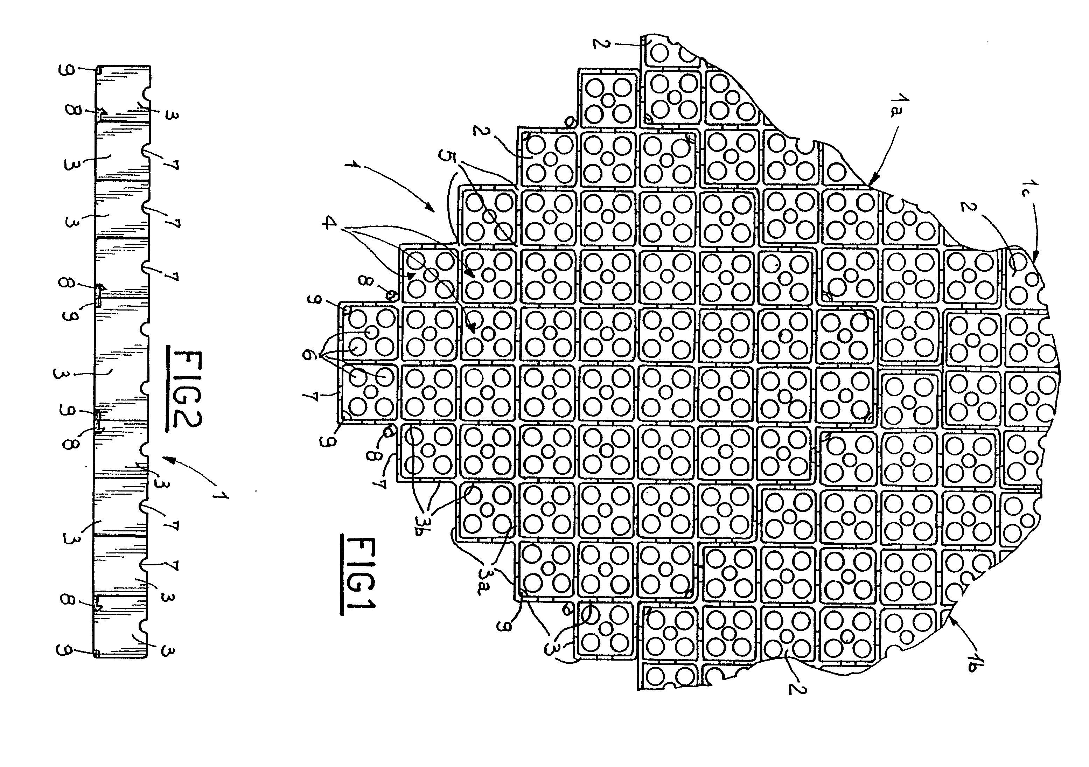

Partitions 3a and 3b mutually intersect thus giving rise to a number of cells 4 preferably having a cubic configuration, homogeneously distributed over the whole surface of base 2. As shown in Fig. 1, at the intersections of partitions 3a and 3b there is the formation of junction points 5 of greater thickness than each single partition 3.

Associated with each cell 4 is at least a through hole 6 formed in base 2. In the example shown each cell 4 has five through holes 6 associated therewith which are disposed in alternate rows so that an important portion of base 2 is open although the structure of the base itself is not greatly weakened.

In addition a number of recesses 7 are also provided on the upper edges of partitions 3. Preferably said recesses 7 have a half-cercle configuration and are distributed in such a manner that at least one of said recesses is located on each of said partitions 3 belonging to each cell 4.

The reinforcing element 1 in the embodiment has a stepped outline defined by the partitions 3 of the cells 4 distributed along the periphery thereof.

Element 1 thus embodied can be associated in a modular fashion with other elements, designated by 1a, 1b, 1c, and similar to the first one, as shown in Fig. 1, thereby giving rise to a uniform paving.

Advantageously engagement means is also provided for mutually fastening two adjacent elements 1, 1a, 1b, 1c in the right position. This engagement means substantially comprises a number of engagement lugs 8 projecting from the perimeter edges of base 2, as well as a number of coupling housings 9 formed on the base itself, adjacent the perimeter edges thereof. The engagement lugs 8 of each element 1, 1a, 1b, 1c are arranged so that they can be inserted into the coupling housings 9 of the adjacent element.

The holding and reinforcing element of the invention is used in the following manner.

After the ground has been duly prepared and levelled in a manner known per se, the laying of elements 1, 1a, 1b, 1c takes place. Said elements are merely laid down on the ground in side-by-side relation and mutually interconnected through the above mentioned engagement means, so as create a uniform paving covering the whole area of interest. Optionally the positioning of the reinforcing elements 1, 1a, 1b, 1c can be made fast also by means of anchoring means spanning between two of the through holes 6 and then entering the ground.

After completion of the above described laying, the whole area is scattered with earth to such an amount that cells 4 are completely or almost completely filled.

At this point it is possible to carry out the sowing of the soil or to directly put in place a previously grown lawn.

The grass paving thus obtained, once the necessary settling of the ground has taken place, is adapted to be frequently trampled on and to withstand frequent passages of motor-vehicles and the like without being submitted to important damages. In fact all charges to which the tramped-on grass surface is submitted are directly transmitted to partitions 3 and therefore distributed over the whole surface of base 2. Thus the ground is prevented from being compacted as a result of strong localized charges.

The presence of the through holes 6 prevents water from stagnating in the earth contained in cells 4 and at the same time allows the nourishing elements to reach the inside of said cells. In addition, due to the presence of recesses 7, in the lawn stolons, rhizomes and the like can have a regular growth.

The present invention attains the intended purposes.

The holding and reinforcing element hereinabove described can be in fact completely buried at the moment of its installation and therefore does not at all alter the aesthetic feature of the lawn. At the most the upper edges of partitions 3 can slightly project from the ground in those areas which are particularly submitted to the passage of motor-vehicles or the like. In this case too, however, the aesthetic aspect of the lawn is not greatly impaired due to the thin thickness of partitions 3. In addition it is also possible to give an appropriate colouring to the plastic material used in the accomplishment of the holding and reinforcing element.

Unlike currently used traditional elements made of cement, the element of the invention does not store heat in hot days because it is completely immersed in the ground and is made of insulating material. Therefore, unlike lawns of the known art, grass has a regular growth and no problem of jellowing exists.

Further advantages of the invention reside in a much stronger structure than in the case of conventional cement elements as well as in a much lighter weight per surface unit as compared to the latter. The above features bring about better reliability and use qualities and facilitations in storage, transport and installation operations.

Obviously the present invention is susceptible of modifications and variations, all of which falls within the scope of the inventive idea characterizing it.

It will be appreciated that the element of the invention for example can also be used to consolidate the ground in general, as well as for the preparation of flower-beds or gardens and the arrangement of flowers or the like according to particular designs which can be easily followed as cells 4 are disposed in an orderly manner.

## Claims

1. A holding and reinforcing modular element for the accomplishment of grass pavings, characterized in that it comprises a flat base (2) from which mutually intersecting partitions (3) vertically stand up which give rise to a number of homogeneously distributed cells (4) each of them having at least a through hole (6) formed in said base (2), associated therewith, said holding and reinforcing element (1) being made of plastic material and being arranged so as to be combined in a modular fashion with other similar elements (1a,1b, 1c) thereby giving rise to a uniform paving.

2. An element according to claim 1, characterized in that each of said partitions (3) belonging to each cell (4) is provided with at least a recess (7) formed in its upper edge.

3. An element according to claim 1, characterized in that it further comprises engagement means (8, 9) for mutually fastening two adjacent holding and reinforcing elements in the right position.

4. An element according to claim 3, characterized in that said engagement means comprises engagement lugs (8) projecting from the perimeter edges of said base (2) and coupling housings (9) formed in the base itself, adjacent the perimeter edges thereof, the engagement lugs (8) of one holding and reinforcing element (1, 1a, 1b, 1c) being arranged in such a manner that they can mate with the coupling housings (9) of the adjacent holding and reinforcing element.

5. An element according to claim 1, characterized in that it exhibits a stepped outline defined by the partitions (3) of the cells (4) distributed along the periphery thereof.

6. An element according to claim 1, characterized in that said cells (4) have a substantially cubic configuration.

7. An element according to claim 1, characterized in that a number of through holes (6) is associated with each of said cells (4), said through holes being arranged in alternate rows.

8. An element according to claim 1, characterized in that it is made of one piece construction.

9. An element according to claim 1, characterized in that junction points (5) are formed at the intersections between partitions (3), the thickness of said junction points being greater than that of the single partition.

10. An element according to claim 1, characterized in that it is made of high density polyethylene.

FIG1

FIG2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 162 876 (MASCARO) <br> * Whole document * | 1-6,8, 10 | E 01 C 9/00 <br> E 01 C 13/00 |
| X | DE-U-8 622 303 (WORMSER RECYCL.) <br> * Whole document * | 1,3,8,9 | |
| Y | | 2,5 | |
| A | | 4,10 | |
| Y | DE-U-8 600 430 (RINN) <br> * Figure 1B * | 2 | |
| Y | FR-A-2 275 972 (DJANIAN) <br> * Figure 5 * | 5 | |
| X | DE-U-8 322 275 (WEICHENRIEDER) <br> * Whole document * | 1,3,4,6 ,8 | |

TECHNICAL FIELDS SEARCHED (Int. Cl.5)

E 01 C
E 02 D

The present search report has been drawn up for all claims

| Place of search | Date of completion of the search | Examiner |
|---|---|---|
| THE HAGUE | 09-01-1990 | DIJKSTRA G. |

EPO FORM 1503 03.82 (P0401)